# EUROPÄISCHE PATENTSCHRIFT

(11) **EP 2 520 839 B1**
(45) Veröffentlichungstag und Bekanntmachung des Hinweises auf die Patenterteilung: **30.09.2015**
(21) Anmeldenummer: 12165148.3
(22) Anmeldetag: 23.04.2012
(51) Int. Cl.: F16L 11/08, F16L 53/00, E21B 17/01, F16L 11/24, H05B 3/48

(54) **Temperierbare Rohrleitung für Offshoreanwendungen**
Temperable pipe for offshore applications
Conduite pouvant être tempérée pour applications offshore

(30) Priorität: 06.05.2011 DE 102011075383
(43) Veröffentlichungstag der Anmeldung: 07.11.2012
(73) Patentinhaber: Evonik Degussa GmbH, 45128 Essen (DE)
(72) Erfinder: Göring, Rainer, 46325 Borken (DE); Dowe, Andreas, 46325 Borken (DE); Kuhmann, Karl, 48249 Dülmen (DE); Gruhn, Maximilian, 45770 Marl (DE); Franosch, Juergen, 45770 Marl (DE)

(56) Entgegenhaltungen:
- EP-A2- 0 312 204
- WO-A1-2010/032017
- GB-A- 2 065 430
- US-A- 4 286 376
- US-A- 5 428 706
- US-A1- 2002 100 516

## Beschreibung

Gegenstand der vorliegenden Erfindung ist ein temperierbares, flexibles Rohr mehrschichtigen Aufbaus mit unverbundenen Schichten. Ein derartiges Rohr wird im Folgenden der Einfachheit halber und dem englischen Sprachgebrauch entsprechend als Unbonded Flexible Pipe bezeichnet. Es setzt der Diffusion von Gasen aus einem beförderten Fluid einen hohen Widerstand entgegen und kann daher zur Beförderung flüssiger oder gasförmiger Medien und mit besonderem Vorteil zur Beförderung von Rohöl oder Erdgas eingesetzt werden.

Unbonded Flexible Pipes sind als solche Stand der Technik. Derartige Rohre enthalten eine innere Auskleidung, üblicherweise in Form eines Kunststoffrohres, als Barriere gegen den Austritt des beförderten Fluids, sowie eine oder mehrere Armierungsschichten auf der Außenseite dieser inneren Auskleidung. Das Unbonded Flexible Pipe kann zusätzliche Schichten enthalten, beispielsweise eine oder mehrere Armierungsschichten auf der Innenseite der inneren Auskleidung, um das Zusammenfallen der inneren Auskleidung bei hohem Außendruck zu verhindern. Eine derartige innere Armierung wird üblicherweise als Karkasse bezeichnet. Darüber hinaus kann eine äußere Umhüllung enthalten sein, um eine Barriere gegen das Eindringen von Flüssigkeit aus der äußeren Umgebung in die Armierungsschichten oder weitere innen liegende polymere oder metallische Funktionsschichten vorzusehen. In vielen Fällen wird zwischen den äußeren Armierungsschichten eine Thermoplastschicht eingefügt, etwa in Form von gewickelten "Anti-Wear Tapes", um Abrieb an der Metallkonstruktion durch Reibung zu verhindern.

Typische Unbonded Flexible Pipes sind beispielsweise in der WO 01/61232, der US 6123114 und der US 6085799 beschrieben; sie sind darüber hinaus in API Recommended Practice 17B, "Recommended Practice for Flexible Pipe", 3. Auflage, März 2002 sowie in API Specification 17J, "Specification for Unbonded Flexible Pipe" 2. Auflage, November 1999 näher charakterisiert.

Der Ausdruck "unbonded" bedeutet in diesem Zusammenhang, dass mindestens zwei der Schichten, einschließlich Armierungsschichten und Kunststoffschichten, nicht konstruktiv miteinander verbunden sind. Dadurch wird das Rohr biegsam und ausreichend flexibel, um es für Transportzwecke aufzurollen.

Derartige Unbonded Flexible Pipes werden in verschiedenen Ausführungen in Offshore-Anwendungen sowie in verschiedenen Onshore-Anwendungen für den Transport von Flüssigkeiten, Gasen und Aufschlämmungen eingesetzt. Sie können beispielsweise für den Transport von Fluiden dort eingesetzt werden, wo über die Länge des Rohres hinweg ein sehr hoher oder ein sehr unterschiedlicher Wasserdruck existiert, etwa in Form von Steigleitungen, die vom Meeresboden hoch zu einer Einrichtung an oder nahe der Meeresoberfläche verlaufen, ferner generell als Rohre für den Transport von Flüssigkeiten oder Gasen zwischen verschiedenen Einrichtungen, als Rohre, die in großer Tiefe auf dem Meeresboden verlegt sind, oder als Rohre zwischen Einrichtungen nahe der Meeresoberfläche.

In herkömmlichen flexiblen Rohren bestehen die Armierungsschicht oder die Armierungsschichten meistens aus spiralförmig angeordneten Stahldrähten, Stahlprofilen oder Stahlbändern, wobei die einzelnen Schichten mit verschiedenen Windungswinkeln relativ zur Rohrachse ausgebildet sein können.

Die innere Auskleidung besteht im Stand der Technik üblicherweise aus einem Polyolefin wie Polyethylen, das auch vernetzt sein kann, aus einem Polyamid wie PA11 oder PA12 oder aus Polyvinylidenfluorid (PVDF). Daneben sind ein- oder mehrschichtige Auskleidungen bekannt, die auch Schichten aus anderen Materialien enthalten können.

Bei Temperaturen von unterhalb etwa 40°C können aus dem Rohöl einige Bestandteile ausfallen. Hier spielt insbesondere das Ausfallen von Wachsen und gegebenenfalls Hydraten eine Rolle, welche zu einer Verringerung des Rohrquerschnitts führen können. Um auch bei tiefen Temperaturen die Transportfunktion zu gewährleisten, sollten diese Leitungen beheizbar sein, um dieses Phänomen zu verhindern. Es gibt unterschiedliche Möglichkeiten, die Erwärmung derartiger Leitungen durchzuführen.

Die WO91/18231 offenbart den Oberbegriff vom Anspruch 1 und beschreibt ein beheizbares flexibles Rohrsystem, welches elektrisch leitfähige Kabel enthält, die mit einer elektrisch leitfähigen Stromquelle verbunden sind und nach dem Prinzip einer Widerstandsheizung Wärme erzeugen. Nachteilig an diesem Konzept sind das aufwendige Design und die unregelmäßige Temperierung über die Gesamtlänge.

Darüber hinaus wird in der WO 97/20162 ein flexibles Rohrsystem beschrieben, bei dem um eine flexible innere Rohrleitung mehrere kleinere Rohrleitungen platziert sind. Diese können zum Transport von Prozessmedien oder Strom genutzt werden. Denkbar wäre auch eine Temperierung des Rohrsystems, indem ein temperiertes Medium durchgeleitet wird. Die Nachteile dieses Konzepts sind ebenfalls das aufwendige Design, Wärmeverluste sowie die unregelmäßige Temperierung über die Gesamtlänge.

Andere Anmeldungen (WO 92/11487, WO 85/04941, WO 2000/66934, WO 2000/66935 und WO 2001/07824) beschäftigen sich mit dem Thema der thermischen Isolierung als passive Stabilisierung der Medientemperatur. Hier besteht aber das Problem der Kompressibilität der häufig verwendeten geschäumten Strukturen. Dies kann bei großen Wassertiefen und den damit verbundenen hohen Außendrücken zu einer Reduzierung der Isolierwirkung führen.

Eine weitere Möglichkeit zur Erwärmung wird in der WO 2006/097765, der WO 2006/090182, der US 2008202616 und der US 4 874 925 beschrieben. Es handelt sich um ein Mehrschichtrohr, in dem z. B. zwei Leiter vorhanden sind, die längs des Rohres um 180° versetzt zueinander in einer leitfähigen Schicht eingebettet sind. Aufgrund des Stromflusses von einem Leiter zum anderen erfolgt die Erwärmung in der leitfähigen Schicht. Eine Anbindung an bzw. ein gleichmäßiger Kontakt des Leiters mit der leitfähigen Schicht ist für eine gleichmäßige Erwärmung wichtig. Die leitfähige Schicht ist nach außen hin thermisch und gegebenenfalls elektrisch isoliert. Eine zusätzliche Schicht nach innen zum Rohöl ist zur elektrischen Isolierung ratsam bzw. notwendig.

In der WO 2008/005829 werden heizbare Leitungen im Automobilbereich beschrieben, die eine elektrisch leitfähige Polymerschicht enthalten können; diese Schicht wirkt als Widerstandsheizung.

In der GB 2 065 430 A wird ein Rohr für medizinische Zwecke beschrieben, das eine Innenschicht und eine Außenschicht aus Fluorpolymeren und eine heizbare Zwischenschciht enthält, die aus einem um die Innenschicht gewickelten leitfähigen Band besteht. Darüber hinaus beschreibt die WO 2010/032017 ein heizbares Kabel, das beispielsweise um eine in der Erde befindliche Ölförderleitung gewickelt sein kann. Eine solche Ölförderleitung ist ein starres Rohr; das Kabel liegt dem Rohr auf und ist damit kein integraler Bestandteil der Leitung.

Die Aufgabe der Erfindung bestand darin, ein flexibles Rohr mehrschichtigen Aufbaus bereitzustellen, bei dem das geförderte Medium ohne nennenswerten zusätzlichen konstruktiven Aufwand elektrisch geheizt werden kann. Dabei sollte es möglich sein, die Rohrleitung gezielt nur in den Rohrabschnitten zu heizen, wo es konkret erforderlich ist.

Diese Aufgabe wurde durch ein flexibles Rohr zur Beförderung von Rohöl oder Erdgas gelöst, das von innen nach außen folgende Schichten enthält:
- eine innere Auskleidung,
- mindestens eine Armierungsschicht sowie
- gegebenenfalls eine äußere Umhüllung,
   wobei sich zusätzlich zwischen zwei Schichten eine weitere Schicht aus einem gewickelten Tape befindet, wobei das Tape folgende Schichten enthält:
   a) eine erste äußere Schicht **(1)** aus einer nicht elektrisch leitfähigen Kunststoffformmasse,
   b) eine Zwischenschicht **(2)** aus einer elektrisch leitfähigen Kunststoffformmasse, deren spezifischer Durchgangswiderstand gemäß IEC 60093 im Bereich von 10⁻³ bis 10¹⁰ Ωm, vorzugsweise im Bereich von 10⁻² bis 10⁸ Ωm, besonders bevorzugt im Bereich von 10⁻¹ bis 10⁷ Ω m und insbesondere bevorzugt im Bereich von 10⁰ bis 10⁶ Ωm liegt, wobei in die Zwischenschicht mindestens zwei metallische Leiter **(4)** entlang des Tapes so eingebettet sind, dass sie sich über die gesamte Länge hinweg nicht berühren, sowie
   c) eine zweite äußere Schicht **(3)** aus einer nicht elektrisch leitfähigen Kunststoffformmasse.

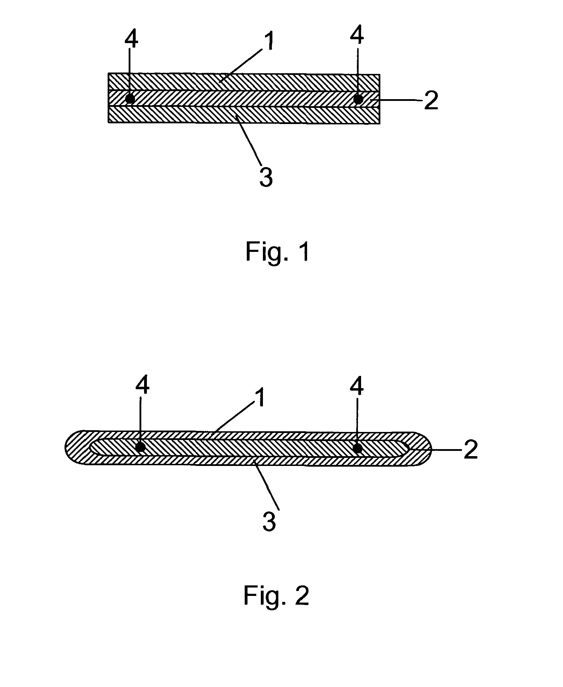

Hinsichtlich der Bezugszeichen wird auf die Figuren 1 und 2 verwiesen.

Die innere Auskleidung ist üblicherweise ein Kunststoffrohr, das eine Barriere gegen den Austritt des beförderten Fluids darstellt. Je nach anwendungstechnischen Erfordernissen kann es einschichtig sein oder auch aus mehreren Schichten aus jeweils unterschiedlichen Formmassen bestehen. In diesem Fall ist es beispielsweise zweischichtig, dreischichtig, vierschichtig oder es besteht im Einzelfall auch aus noch mehr Schichten. Derartige Auskleidungen sind Stand der Technik. Die innere Auskleidung kann in einer weiteren Ausführungsform auch aus einem gewellten, dünnwandigen Metallrohr bestehen.

Die Armierungsschicht beziehungsweise die Armierungsschichten bestehen üblicherweise aus spiralförmig angeordneten Stahldrähten, Stahlprofilen oder Stahlbändern. Die Ausführung dieser Armierungsschichten ist Stand der Technik. Vorzugsweise ist mindestens eine dieser Armierungsschichten so aufgebaut, dass sie dem Innendruck standhält, und mindestens eine weitere dieser Armierungsschichten ist so aufgebaut, dass sie Zugkräften standhält. Üblicherweise liegen mehr als zwei Armierungsschichten vor. An die Armierungsschichten schließt sich in den meisten Fällen eine äußere Umhüllung an, üblicherweise in Form eines Rohres oder Schlauches aus einer thermoplastischen Formmasse oder einem Elastomer.

In einer möglichen Ausführungsform befindet sich auf der inneren Seite der inneren Auskleidung des Unbonded Flexible Pipes eine Karkasse. Derartige Karkassen und ihre Ausführung sind Stand der Technik. In einer weiteren möglichen Ausführungsform enthält das Unbonded Flexible Pipe keine Karkasse, vor allem dann, wenn es nicht unter hohen Außendrucken betrieben werden soll.

Geeignete Materialien für die elektrisch leitfähige Kunststoffformmasse sowie für die beiden nicht elektrisch leitfähigen Kunststoffformmassen sind unabhängig voneinander Formmassen beispielsweise auf Basis von olefinischen Polymeren, Polyamiden, Fluorpolymeren, Polyethylen-2,6-naphthalat, Polybutylen-2,6-naphthalat, Polyphenylsulfon, Polyarylenetherketon, Polyphenylensulfid oder eines Polyarylenetherketon/Polyphenylensulfid-Blends.

Das olefinische Polymer kann in erster Linie ein Polyethylen, insbesondere ein Polyethylen hoher Dichte (HDPE), oder ein isotaktisches oder syndiotaktisches Polypropylen sein. Das Polypropylen kann ein Homo- oder ein Copolymer sein, beispielsweise mit Ethylen oder 1-Buten als Comonomer, wobei Random- als auch Blockcopolymere eingesetzt werden können. Darüber hinaus kann das Polypropylen auch schlagzähmodifiziert sein, beispielsweise dem Stand der Technik entsprechend mittels Ethylen-Propylen-Kautschuk (EPM) oder EPDM. Das ebenfalls erfindungsgemäß verwendbare syndiotaktische Polystyrol kann auf bekannte Weise durch metallocenkatalysierte Polymerisation von Styrol hergestellt werden.

Das Polyamid ist herstellbar aus einer Kombination von Diamin und Dicarbonsäure, aus einer ω-Aminocarbonsäure oder dem entsprechenden Lactam. Grundsätzlich kann jedes Polyamid verwendet werden, beispielsweise PA6 oder PA66. In einer bevorzugten Ausführungsform enthalten die Monomereinheiten des Polyamids im Mittel mindestens 8, mindestens 9 bzw. mindestens 10 C-Atome. Bei Gemischen von Lactamen wird hier das arithmetische Mittel betrachtet. Bei einer Kombination von Diamin und Dicarbonsäure muss das arithmetische Mittel der C-Atome von Diamin und Dicarbonsäure in dieser bevorzugten Ausführungsform mindestens 8, mindestens 9 bzw. mindestens 10 betragen. Geeignete Polyamide sind beispielsweise: PA610 (herstellbar aus Hexamethylendiamin [6 C-Atome] und Sebacinsäure [10 C-Atome], das Mittel der C-Atome in den Monomereinheiten beträgt hier somit 8), PA88 (herstellbar aus Octamethylendiamin und 1.8-Octandisäure), PA8 (herstellbar aus Capryllactam), PA612, PA810, PA108, PA9, PA613, PA614, PA812, PA128, PA1010, PA10, PA814, PA148, PA1012, PA11, PA1014, PA1212 und PA12. Die Herstellung der Polyamide ist Stand der Technik. Selbstverständlich können auch hierauf basierende Copolyamide eingesetzt werden, wobei gegebenenfalls auch Monomere wie Caprolactam mit verwendet werden können.

Als Polyamid kann vorteilhafterweise auch ein teilaromatisches Polyamid verwendet werden, dessen Dicarbonsäureanteil zu 5 bis 100 Mol-% von aromatischer Dicarbonsäure mit 8 bis 22 C-Atomen herrührt und das einen Kristallitschmelzpunkt Tₘ von mindestens 260 °C, vorzugsweise von mindestens 270 °C und besonders bevorzugt von mindestens 280 °C besitzt. Derartige Polyamide werden üblicherweise als PPA bezeichnet. Sie sind herstellbar aus einer Kombination von Diamin und Dicarbonsäure, gegebenenfalls unter Zusatz einer ω -Aminocarbonsäure oder dem entsprechenden Lactam. Geeignete Typen sind beispielsweise PA66/6T, PA6/6T, PA6T/MPMDT (MPMD steht für 2-Methylpentamethylendiamin), PA9T, PA10T, PA11T, PA12T, PA14T sowie Copolykondensate dieser letzten Typen mit einem aliphatischen Diamin und einer aliphatischen Dicarbonsäure oder mit einer ω -Aminocarbonsäure bzw. einem Lactam.

Neben Polyamid kann die Formmasse weitere Komponenten enthalten wie z.B. Schlagzähmodifikatoren, andere Thermoplaste, Weichmacher und andere übliche Zusatzstoffe. Erforderlich ist nur, dass das Polyamid die Matrix der Formmasse bildet.

Das Fluorpolymer kann beispielsweise ein Polyvinylidenfluorid (PVDF), ein Ethylen-Tetrafluorethylen-Copolymer (ETFE), ein mit Hilfe einer Terkomponente wie beispielsweise Propen, Hexafluorpropen, Vinylfluorid oder Vinylidenfluorid modifiziertes ETFE (beispielsweise EFEP), ein Ethylen-Chlortrifluorethylen-Copolymer (E-CTFE), ein Polychlortrifluorethylen (PCTFE), ein Chlortrifluorethylen-Perfluoralkylvinylether-Tetrafluorethylen-Copolymer (CPT), ein Tetrafluorethylen-Hexafluorpropen-Copolymer (FEP) oder ein Tetrafluorethylen-Perfluoralkylvinylether-Copolymer (PFA) sein. In Frage kommen auch Copolymere auf Basis von Vinylidenfluorid, die bis zu 40 Gew.-% andere Monomere aufweisen wie beispielsweise Trifluorethylen, Chlortrifluorethylen, Ethylen, Propen und Hexafluorpropen.

Polyphenylsulfon (PPSU) wird beispielsweise unter dem Handelsnamen Radel^{®} von Solvay Advanced Polymers produziert. Es kann aus 4,4'-Dihydroxybiphenyl und 4,4'-

Dihydroxydiphenylsulfon durch nucleophile Substitution hergestellt werden. Insbesondere ist auch ein PPSU/Fluorpolymer-Blend geeignet, beispielsweise ein PPSU/PTFE-Blend.

Das ebenfalls verwendbare Polyarylenetherketon enthält Einheiten der Formeln

(-Ar-X-) und (-Ar'-Y-),

wobei Ar und Ar' einen zweiwertigen aromatischen Rest darstellen, vorzugsweise 1,4-Phenylen, 4,4'-Biphenylen sowie 1,4-, 1,5- oder 2,6-Naphthylen. X ist eine elektronenziehende Gruppe, bevorzugt Carbonyl oder Sulfonyl, während Y eine andere Gruppe wie O, S, CH₂, Isopropyliden oder dergleichen darstellt. Hierbei stellen mindestens 50 %, bevorzugt mindestens 70 % und besonders bevorzugt mindestens 80 % der Gruppen X eine Carbonylgruppe dar, während mindestens 50 %, bevorzugt mindestens 70 % und besonders bevorzugt mindestens 80 % der Gruppen Y aus Sauerstoff bestehen.

In der bevorzugten Ausführungsform bestehen 100 % der Gruppen X aus Carbonylgruppen und 100 % der Gruppen Y aus Sauerstoff. In dieser Ausführungsform kann das Polyarylenetherketon beispielsweise ein Polyetheretherketon (PEEK; Formel I), ein Polyetherketon (PEK; Formel II), ein Polyetherketonketon (PEKK; Formel III) oder ein Polyetheretherketonketon (PEEKK; Formel IV) sein, jedoch sind natürlich auch andere Anordnungen der Carbonyl- und Sauerstoffgruppen möglich.

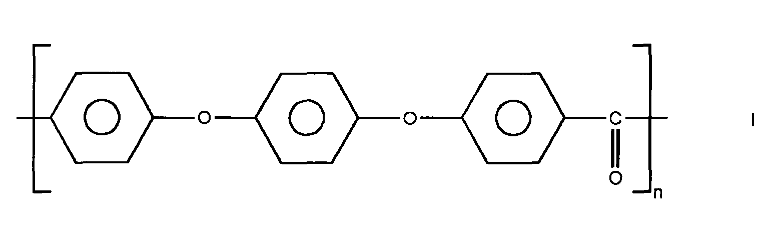

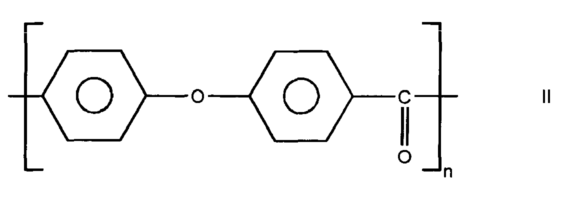

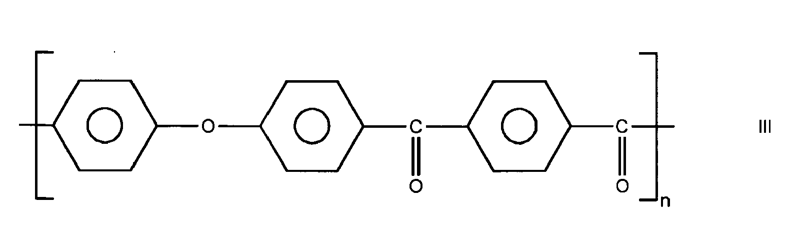

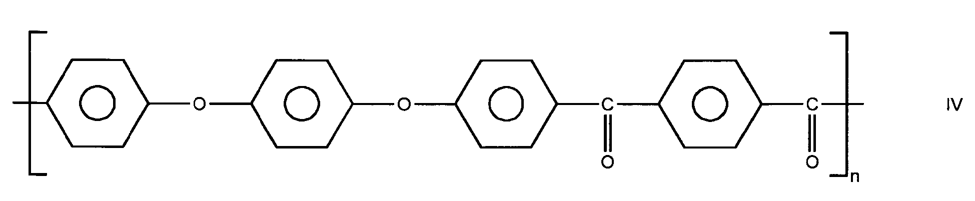

Das Polyarylenetherketon ist teilkristallin, was sich beispielsweise in der DSC-Analyse durch Auffinden eines Kristallitschmelzpunkts Tₘ äußert, der größenordnungsmäßig in den meisten Fällen um 300 °C oder darüber liegt.

Das Polyphenylensulfid enthält Einheiten der Formel

(-C₆H₄-S-);

vorzugsweise besteht es zu mindestens 50 Gew.-%, mindestens 70 Gew.-% bzw. mindestens 90 Gew.-% aus diesen Einheiten. Die restlichen Einheiten können solche sein, wie sie oben im Falle des Polyarylenetherketons angegeben sind, oder tri- oder tetrafunktionelle Verzweigereinheiten, die aus der Mitverwendung beispielsweise von Trichlorbenzol oder Tetrachlorbenzol bei der Synthese resultieren. Polyphenylensulfid ist in einer Vielzahl von Typen bzw. Formmassen handelsüblich.

Bei den Polyarylenetherketon/Polyphenylensulfid-Blends können beide Komponenten in jedem denkbaren Mischungsverhältnis vorliegen, so dass der Zusammensetzungsbereich von reinem Polyarylenetherketon bis zu reinem Polyphenylensulfid lückenlos überstrichen wird. Im Allgemeinen enthält das Blend mindestens 0,01 Gew.-% Polyarylenetherketon bzw. mindestens 0,01 Gew.-% Polyphenylensulfid.

Die Kunststoffformmassen können die üblichen Hilfs- und Zusatzstoffe sowie gegebenenfalls weitere Polymere enthalten, im Falle des Polyarylenetherketons beispielsweise Fluorpolymere wie PFA (ein Copolymer aus Tetrafluorethen und Perfluorvinylmethylether), Polyimid, Polyetherimid, LCP wie beispielsweise flüssigkristalliner Polyester, Polysulfon, Polyethersulfon, Polyphenylsulfon, Polybenzimidazol (PBI) oder weitere hochtemperaturbeständige Polymere, im Falle des Polyphenylensulfids beispielsweise Copolymere bzw. Terpolymere von Ethylen mit polaren Comonomeren und im Falle des teilaromatischen Polyamids ein aliphatisches Polyamid. Die Polyamidformmasse kann beispielsweise auch einen Hydrolysestabilisator, einen Weichmacher bzw. Schlagzähmodifikatoren enthalten. Die Formmasse kann darüber hinaus ein Schmiermittel wie Molybdändisulfid, hexagonales Bornitrid oder PTFE enthalten. Der Anteil der Basispolymeren sowie im bevorzugten Fall der Anteil an olefinischem Polymer, Polyamid, Fluorpolymer, Polyphenylsulfon, Polyarylenetherketon, Polyphenylensulfid beziehungsweise Polyarylenetherketon/Polyphenylensulfid-Blend an der Formmasse beträgt mindestens 50 Gew.-%, bevorzugt mindestens 60 Gew.-%, besonders bevorzugt mindestens 70 Gew.-%, insbesondere bevorzugt mindestens 80 Gew.-% und ganz besonders bevorzugt mindestens 90 Gew.-%.

Die elektrische Leitfähigkeit der Zwischenschicht gemäß b) wird auf bekannte Weise erreicht, beispielsweise durch Zusatz von Ruß, Leitfähigkeitsruß, Graphitpulver und/oder Carbon Nanotubes (CNTs) bzw. Graphitfibrillen.

Neben den Schichten gemäß a), b) und c) kann das Tape, falls gewünscht, noch weitere Schichten enthalten, beispielsweise eine Haftvermittlerschicht zwischen den Schichten gemäß a) und b) und/oder eine Haftvermittlerschicht zwischen den Schichten gemäß b) und c).

Die Querschnittsfläche des Tapes kann beispielsweise rechteckig oder auch abgerundet sein.

An den Rändern des Tapes können die einzelnen Schichten freiliegen (Figur 1) oder die Schichten gemäß a) und c) können dort miteinander verbunden sein (Figur 2), um auf diese Weise eine bestmögliche elektrische Isolierung zu den Armierungsschichten zu erzielen.

Die in die Schicht gemäß b) eingebetteten metallischen Leiter können an eine elektrische Stromquelle angeschlossen werden. Aufgrund der dann vorhandenen Potentialdifferenz zwischen den einzelnen Leitern fließt ein Strom durch die elektrisch leitfähige Zwischenschicht; diese Schicht fungiert damit als Widerstandsheizung. Die angelegte Spannung kann hierbei Gleichspannung oder Wechselspannung sein. Aus Gründen der Ausfallsicherheit kann es günstig sein, wenn in die Zwischenschicht gemäß b) mehr als zwei metallische Leiter eingebettet sind, beispielsweise drei, vier, fünf oder sechs. Die metallischen Leiter müssen korrosionsbeständig gegenüber dem geförderten Fluid und seinen Bestandteilen sein.

Das Tape besitzt üblicherweise eine Dicke im Bereich von 0,2 bis 5 mm, vorzugsweise im Bereich von 0,4 bis 5 mm und besonders bevorzugt im Bereich von 0,5 bis 4 mm. Hierbei hat die Zwischenschicht gemäß b) in der Regel eine Dicke im Bereich von 0,1 bis 3 mm, vorzugsweise im Bereich von 0,2 bis 2,5 mm und besonders bevorzugt im Bereich von 0,3 bis 2 mm, während die beiden äußeren Schichten gemäß a) und c) in der Regel jeweils eine Dicke im Bereich von 0,05 bis 1,5 mm, vorzugsweise im Bereich von 0,1 bis 1 mm und besonders bevorzugt im Bereich von 0,1 bis 0,5 mm haben.

Die Breite des Tapes ist abhängig vom Rohrdurchmesser. Übliche Breiten liegen im Bereich von etwa 20 mm bis etwa 700 mm, bevorzugt im Bereich von etwa 30 mm bis etwa 500 mm und besonders bevorzugt im Bereich von etwa 40 mm bis etwa 300 mm.

Das Tape wird unter Spannung spiralig auf eine weiter innen liegende Schicht aufgewickelt, wobei die Wicklung entweder auf Stoß oder überlappend durchgeführt werden kann. Im letzten Fall kann das Tape nach dem Wickeln an den Überlappungsstellen verschweißt werden. Dies kann entweder durch Heißgasschweißen, durch Kontakt mit einem Heizelement, mittels einer (Gas)Flamme oder durch Einstrahlen elektromagnetischer Strahlung im UV-, sichtbaren oder IR-Spektralbereich geschehen. Prinzipiell reicht eine Punktschweißung zur Fixierung des Tapes aus; bevorzugt wird jedoch kontinuierlich eine ununterbrochene Schweißnaht erzeugt. Selbstverständlich kann man das Tape in den Überlappungsbereichen auch vollflächig verschweißen. Zum Zweck des Verschweißens ist es vorteilhaft, wenn der Erweichungsbereich der Formmasse in den Schichten gemäß a) und c) niedriger ist als der Erweichungsbereich der Formmasse in der Schicht gemäß b).

Um die Ausfallsicherheit zu verbessern, kann man auch mehrere Tapes, die jeweils einen eigenen Stromkreis besitzen, nebeneinander oder übereinander wickeln. Darüber hinaus kann das flexible Rohr auch mehrere solcher Schichten aus gewickeltem Tape besitzen, die durch eine Armierungsschicht voneinander getrennt sind.

Die Schicht aus gewickeltem Tape kann gleichzeitig auch als Anti-Wear-Schicht fungieren. Im Stand der Technik werden Anti-Wear-Tapes zwischen den Armierungsschichten aus Stahl platziert, um einen Abrieb der Armierungsschichten zu verhindern. Dabei kommt es primär zu einem Abrieb des Tapes. Dieser Abrieb muss gegebenenfalls bei der Auslegung berücksichtigt werden, um eine Isolierung der elektrisch leitfähigen Zwischenschicht über die gesamte Lebenszeit der flexiblen Leitung zu gewährleisten. Für die Schichten gemäß a) und c) werden daher bevorzugt Formmassen verwendet, die besonders gute tribologische Eigenschaften aufweisen.

Wenn die Formmasse der Schicht gemäß b) Ruß bzw. Leitfähigkeitsruß als elektrisch leitfähigen Zusatz enthält, kann bei der Beheizung der PTC-Effekt (Positive Temperature Coefficient) ausgenutzt werden. Dieser Effekt stellt eine immanente Sicherheit dar, da er wegen der bei Erwärmung fallenden Leitfähigkeit die Temperaturerhöhung bei konstanter Spannung begrenzt. Eine thermische Schädigung der Rohrleitung oder des zu transportierenden Mediums kann hierdurch verhindert werden.

Erfindungsgemäß ist es auch möglich, das Tape nur in konkreten Rohrabschnitten zu platzieren. Man kann es in dem Bereich leitend ausführen, wo eine gezielte Erwärmung benötigt wird und in anderen Bereichen des Rohres stattdessen beispielsweise ein konventionelles Anti-Wear-Tape einbringen.

Das flexible Rohr kann gegebenenfalls neben den hier beschriebenen Schichten weitere Schichten enthalten, beispielsweise unidirektional oder mit Gewebe verstärkte Polymerschichten, wobei eine gut wärmeleitende Carbonfaserarmierung verwendet werden kann, oder eine außenliegende Schicht zur thermischen Isolierung.

Mit Hilfe der Erfindung ist es möglich, das Rohr über der gesamten Länge oder in ausgewählten Abschnitten zu beheizen, um Ausfällungen zu verhindern. Eine thermische Schädigung des Leitungssystems und des transportierten Mediums kann hierbei vermieden werden. Die technische Umsetzung ist einfach, da keine komplizierten technischen Zusatzteile benötigt werden und der Rohraufbau als solcher nicht verändert wird. Das erfindungsgemäße Rohr lässt sich so effizient beheizen, dass es auch bei der Ölförderung in kalten Regionen, beispielsweise in der arktischen Zone, eingesetzt werden kann. Zusätzlich wird der Einsatz über lange Strecken in der Tiefsee möglich, ohne dass das geförderte Medium unter die oben angesprochene kritische Temperatur abfällt.

## Patentansprüche

1. Flexibles Rohr zur Beförderung von Rohöl oder Erdgas, das von innen nach außen folgende Schichten enthält:
- eine innere Auskleidung sowie
- mindestens eine Armierungsschicht,
wobei sich zusätzlich zwischen zwei Schichten eine weitere Schicht aus einem gewickelten Tape befindet,
**dadurch gekennzeichnet,**
**dass** das Tape folgende Schichten enthält:
a) eine erste äußere Schicht **(1)** aus einer nicht elektrisch leitfähigen Kunststoffformmasse,
b) eine Zwischenschicht **(2)** aus einer elektrisch leitfähigen Kunststoffformmasse, deren spezifischer Durchgangswiderstand gemäß IEC 60093 im Bereich von 10⁻³ bis 10¹⁰ Ωm liegt, wobei in die Zwischenschicht mindestens zwei metallische Leiter **(4)** entlang des Tapes so eingebettet sind, dass sie sich über die gesamte Länge hinweg nicht berühren, sowie
c) eine zweite äußere Schicht **(3)** aus einer nicht elektrisch leitfähigen Kunststoffformmasse.

2. Flexibles Rohr gemäß Anspruch 1,
**dadurch gekennzeichnet,**
**dass** die elektrisch leitfähige Kunststoffformmasse der Zwischenschicht (2) Leitfähigkeitsruß, Graphitpulver und/oder Graphitfibrillen enthält.

3. Flexibles Rohr gemäß einem der vorhergehenden Ansprüche,
**dadurch gekennzeichnet,**
**dass** das Tape eine Dicke im Bereich von 0,2 bis 5 mm besitzt, wobei die Zwischenschicht (2) eine Dicke im Bereich von 0,1 bis 3 mm aufweist und die erste äußere Schicht (1) und die zweite äußere Schicht (3) jeweils eine Dicke im Bereich von 0,05 bis 1,5mm besitzen.

4. Flexibles Rohr gemäß einem der vorhergehenden Ansprüche, **dadurch gekennzeichnet, dass** die Armierungsschicht bzw. die Armierungsschichten aus spiralförmig angeordneten Stahldrähten, Stahlprofilen oder Stahlbändern bestehen.

5. Verwendung des flexiblen Rohrs gemäß einem der vorhergehenden Ansprüche zur Beförderung von Rohöl.

6. Verfahren zur Beheizung eines flexiblen Rohrs gemäß einem der Ansprüche 1 bis 4,
**dadurch gekennzeichnet,**
**dass** die in der Zwischenschicht eingebetteten metallischen Leiter an eine elektrische Stromquelle angeschlossen werden, so dass ein Strom durch die elektrisch leitfähige Zwischenschicht fließt.

## Claims

1. Flexible pipe, for conveying crude oil or natural gas, comprising the following layers, from the inside to the outside:
- an interior lining, and
- at least one reinforcement layer,
where, between two layers, there is also a further layer made of a wound tape,
**characterized in that**
the tape comprises the following layers:
a) a first exterior layer **(1)** made of a plastics moulding composition that is not electrically conductive,
b) an intermediate layer **(2)** made of an electrically conductive plastics moulding composition of which the volume resistivity to IEC 60093 is in the range from 10⁻³ to 10¹⁰ Ωm, where at least two metallic conductors **(4)** have been embedded into the intermediate layer along the tape in such a way that, over the entire length, they do not touch one another, and
c) a second exterior layer **(3)** made of a plastics moulding composition that is not electrically conductive.

2. Flexible pipe according to Claim 1,
**characterized in that**
the electrically conductive plastics moulding composition of the intermediate layer (2) comprises conductive carbon black, graphite powder and/or graphite fibrils.

3. Flexible pipe according to any of the preceding claims,
**characterized in that**
the thickness of the tape is in the range from 0.2 to 5 mm, where the thickness of the intermediate layer (2) is in the range from 0.1 to 3 mm and the thickness of each of the first exterior layer (1) and the second exterior layer (3) is in the range from 0.05 to 1.5 mm.

4. Flexible pipe according to one of the preceding claims, **characterized in that** the reinforcement layer or layers is/are usually composed of helically arranged steel wires, steel profiles or steel tapes.

5. Use of the flexible pipe according to any of the preceding claims for conveying crude oil.

6. Method for heating a flexible pipe according to any of Claims 1 to 4,
**characterized in that**
the metallic conductors embedded in the intermediate layer are attached to a source of electrical current in such a way that a current flows through the electrically conductive intermediate layer.

## Revendications

1. Tuyau flexible pour le transport de pétrole brut ou de gaz naturel, qui comporte les couches suivantes de l'intérieur vers l'extérieur:
- un revêtement intérieur, ainsi que
- au moins une couche d'armature,
dans lequel il se trouve en plus entre deux couches une autre couche en une bande enroulée,
**caractérisé en ce que** la bande contient les couches suivantes:
a) une première couche extérieure (1) en une masse moulée de matière plastique électriquement non conductrice,
b) une couche intermédiaire (2) en une masse moulée de matière plastique électriquement conductrice, dont la résistivité spécifique selon IEC 60093 se situe dans la plage de 10⁻³ à 10¹⁰ Ωm, dans lequel au moins deux conducteurs métalliques (4) sont noyés dans la couche intermédiaire (2) le long de la bande, de telle manière qu'ils ne se touchent pas sur toute la longueur, ainsi que
c) une deuxième couche extérieure (3) en une masse moulée de matière plastique électriquement non conductrice.

2. Tuyau flexible selon la revendication 1, **caractérisé en ce que** la masse moulée de matière plastique électriquement conductrice de la couche intermédiaire (2) contient de la poudre de graphite et/ou des fibrilles de graphite.

3. Tuyau flexible selon l'une quelconque des revendications précédentes, **caractérisé en ce que** la bande présente une épaisseur dans la plage de 0,2 à 5 mm, dans lequel la couche intermédiaire (2) présente une épaisseur dans la plage de 0,1 à 3 mm, et la première couche extérieure (1) et la deuxième couche extérieure (3) présentent respectivement une épaisseur dans la plage de 0,05 à 1,5 mm.

4. Tuyau flexible selon l'une quelconque des revendications précédentes, **caractérisé en ce que** la couche d'armature ou les couches d'armature se compose(nt) de fils d'acier, de profilés d'acier ou de bandes d'acier disposés en forme de spirale.

5. Utilisation du tuyau flexible selon l'une quelconque des revendications précédentes pour le transport de pétrole brut.

6. Procédé de chauffage d'un tuyau flexible selon l'une quelconque des revendications 1 à 4, **caractérisé en ce que** l'on raccorde les conducteurs métalliques noyés dans la couche intermédiaire à une source de courant électrique, de telle manière qu'un courant circule à travers la couche intermédiaire électriquement conductrice.
